# EUROPEAN PATENT SPECIFICATION

(11) **EP 3 379 966 B1**
(45) Date of publication and mention of the grant of the patent: **27.05.2020**
(21) Application number: 16819052.8
(22) Date of filing: 16.12.2016
(51) Int. Cl.: A43D 9/00, A43D 25/06

(54) **MANUFACTURING ARTICLES OF FOOTWEAR**
HERSTELLUNG VON SCHUHARTIKELN
FABRICATION D'ARTICLES CHAUSSANTS

(30) Priority: 17.12.2015 GB 201522319
(43) Date of publication of application: 03.10.2018
(73) Proprietor: C & J Clark International Limited, Street, Somerset BA16 0EQ (GB)
(72) Inventor: TOWNS, Christopher John, Taunton Somerset TA3 7SA (GB); RICKETT, Peter, Windsor Berkshire SL4 1SP (GB); IRELAND, David, Windsor Berkshire SL4 1SP (GB)
(74) Representative: Ruuskanen, Juha-Pekka
(86) International application number: PCT/EP2016/081428
(87) International publication number: WO 2017/103107

(56) References cited:
- DE-A1- 1 910 094
- US-A1- 2014 237 738

## Description

The disclosure relates to manufacturing articles of footwear, and more particularly to methods and apparatuses such as tools and parts thereof for manufacturing articles of footwear. The disclosure further relates to footwear and components of footwear manufactured by the methods and apparatuses.

An article of footwear can comprise e.g. a shoe, boot, sandal or the like or a component thereof. E.g. a shoe is typically manufactured from components known as an upper and a sole. An upper can be made from various materials such as leather, textiles and/or synthetic materials. A sole is typically made from a more hardwearing material. The upper and the sole can comprise layers of (different) materials.

Various techniques are available for producing the shape of footwear. For example, upper material can be formed into a desired shape under heat and high pressure using a specific mould. The mould is commonly called a last in the field of shoemaking. The formed upper is attached to the sole, for example by means of gluing and/or stitching.

Manufacture of footwear is a multistage process where upper and sole components are first formed in separate processes and then these components are bonded together. The various stages of manufacture are labour intensive operations. Shoemaking in its various stages can require skilled and well trained labour, this increasing the cost further. To achieve economies of scale shoes, boots, sandals and so on are typically mass produced in high volumes and long production runs. Any customisation of footwear is time consuming and expensive. For these reasons alone improvements in efficiency and/or flexibility in production of footwear would be desirable.

Vacuum forming has been proposed as a possible technique for producing the uppers. In vacuum forming a sheet of material, typically synthetic material such as non-porous thermoplastic polyurethane (TPU) is drawn by vacuum around a mould while heat is applied on the material, thereby providing the shape of the upper. Examples of vacuum forming can be found from US patent 7,178,267 and GB patents 1300931 and 1485891. DE1910094 A1 discloses a shoe gluing device using a folding rubber wall drawn by vacuum to press free edges of shaft material against shoe skeleton material placed around a last while the last is moved upwards.

However, vacuum forming techniques has difficulty in producing certain shapes and features of the upper in efficient and/or flexible manner. Also, the bonding between a vacuum formed upper and a sole can be problematic. This is partially caused by the difficulty to produce a lower edge of the upper having a shape that is suited for bonding with the sole, but there can also be, depending on the type of the footwear and the materials, other issues that have prevented vacuum forming from becoming widely adapted in manufacture of articles of footwear. There is a desire to provide more efficient and flexible methods, apparatuses and components for producing articles of footwear by means of vacuum assisted forming techniques. The invention relates to method of manufacturing an article of footwear as specified in appended independent claim 1; and to an apparatus for producing an article of footwear as specified in appended independent claim 8. Preferred embodiments of the invention are disclosed in the dependent claims.

According to an aspect there is provided a method of manufacturing an article of footwear, comprising moveably supporting a mould relative to a base of a forming tool such that a gap is provided between at least a part of the mould and the base, placing upper material on the mould, and drawing the upper material towards the mould and the gap by vacuum at the same time when the gap between the mould and the base reduces.

In accordance with another aspect there is provided an apparatus for producing an article of footwear, comprising a base, a mould movably supported relative to the base such that in a first position a gap is provided between at least a part of the mould and the base and in a second position the gap is reduced, and a vacuum arrangement configured to apply vacuum to upper material placed on the mould to draw the upper material towards the mould and the gap at the same time when the gap reduces.

In accordance with a more specific aspect the supporting comprises a biasing arrangement biasing the mould away from the base. Different biasing in different parts of the mould may be provided. The biasing arrangement may comprise at least one spring and/or shock absorber. The biasing may also comprise multistage biasing. The biasing arrangement may be adjustable.

The mould can be drawn towards the base by vacuum.

The mould can be held in a position where the material forming an upper is in contact with a sole component. The mould can be released when the material has set.

A sole part of a footwear is supported on the base and the upper material drawn towards the gap can be brought into contact with the sole part by the relative movement between the mould and the base. The upper material and sole part are then bond. The sole part may comprise a prefabricated sole comprising an adhesive component, the adhesive component being activated when pressed against the upper material and/or heated. The adhesive component may comprise hotmelt-type glue. Material on the sole part may be arranged to fuse with the upper material. The method may comprise fusing materials of two components together without use of an adhesive.

The upper material may be treated by a laser cutting tool. A robot may be provided for moving the upper material in at least one stage of manufacture of the article of footwear. The robot may be configured to take a grip on the support arrangement. The robot may move the formed upper material relative to the laser cutting tool. The upper material may be cut to provide an upper with at least one of final shape, eyelets, tongue, facings, at least one vent opening, and a decorative pattern.

The mould may be adjusted according to a foot.

The article of footwear comprises an upper and therein bonded sole. The mould may be removably supported on the base by at least one support extending through respective aperture in the sole, and the mould can be removed from the upper though an ankle opening.

At least one element supporting the mould can provide spring action between a protruding element and a corresponding bush.

The mould can be arranged to provide a last with over dimensioned frontal part.

A controller may also be provided, the controller being configured to control at least one of movement of the mould, application of vacuum, application of pressure on materials, heating of materials, cooling of materials, and bonding of materials of components together.

Various exemplifying embodiments of the invention are described below with reference to the attached drawings. Steps and elements explained herein may be reordered, omitted, and combined to form different embodiments and any step indicated as performed may be caused to be performed by another device or module. In the drawings:
Figures 1 to 5 show an example of an apparatus and operation thereof for vacuum assisted forming of uppers;
Figure 6 shows an upper and therein bonded sole;
Figure 7 shows another example of an apparatus for vacuum assisted forming of uppers;
Figure 8 shows an example of a prefabricated sole component;
Figure 9 shows the sole component of Figure 8 placed in the forming apparatus of Figure 7;
Figures 10A and 10B are examples of bonding an upper with a sole;
Figures 11A to 11D are sectional views of examples of bonding upper and sole;
Figures 12 and 13 are flowcharts in accordance with certain embodiments;
Figures 14 to 16 relate to the apparatus for trimming a formed upper;
Figure 17 shows an example of a mould;
Figure 18 shows an example of an adjustable mould; and
Figure 19 shows an example of apparatus for controlling the manufacturing operations.

In the following certain detailed examples of use of vacuum forming for manufacture of at least a part of footwear in accordance with the herein described principles are described with reference to the appended Figures.

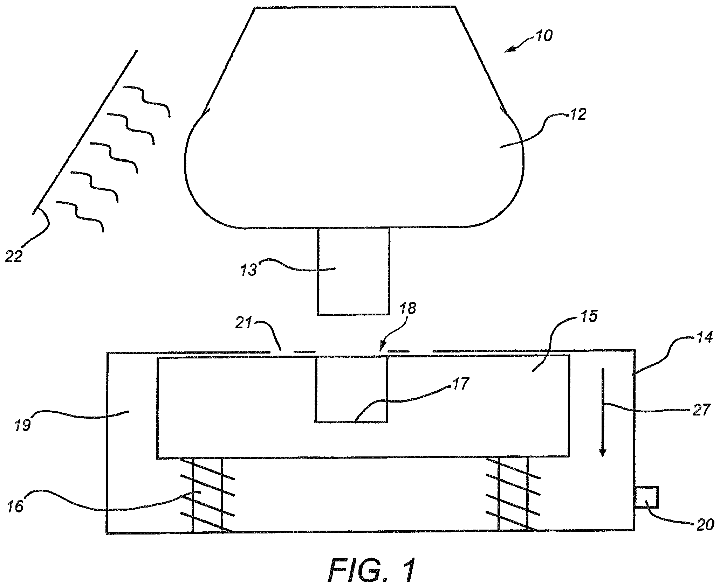

A schematic example of a forming apparatus and operation thereof for forming uppers is shown in Figures 1 to 5. More particularly, a forming tool 10 of Figure 1 comprises a mould, or last, 12 adapted to give an upper a desired shape. The forming tool further comprises a tool body, or base, 14 adapted to support the mould. The support is arranged such that relative movement between the mould and base can be provided.

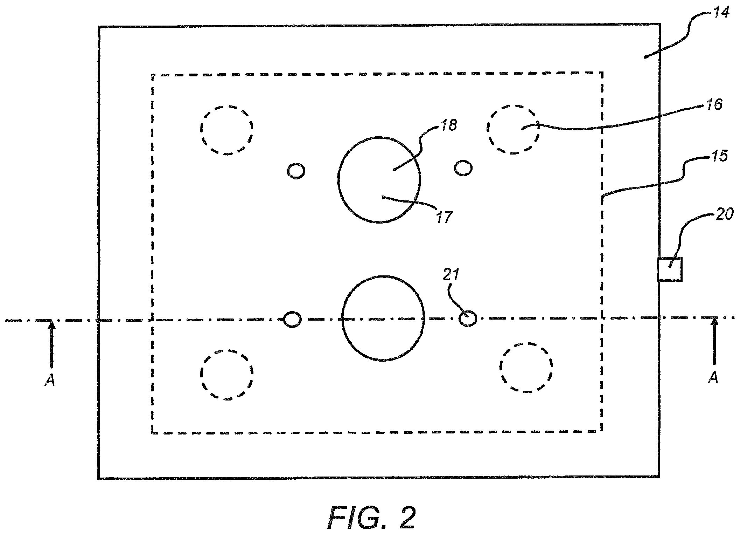

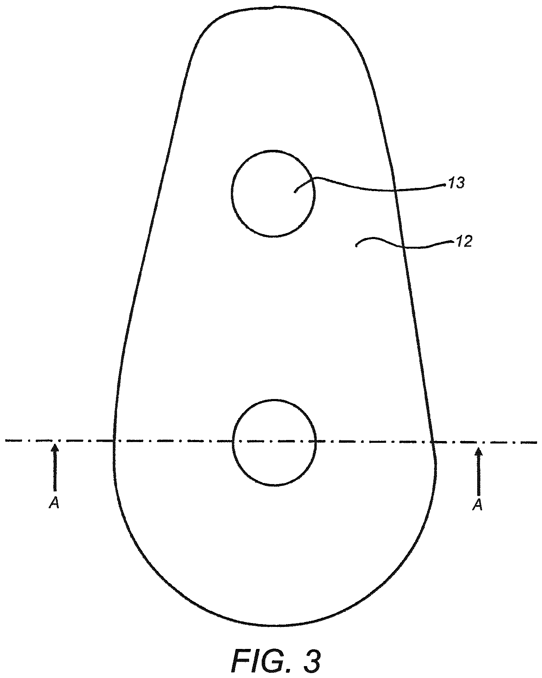

Figure 2 presents a view of the base 14 from above and Figure 3 a view of the mould 12 from below. Figures 1, 4 and 5 are cross-sections of the arrangement seen along line A-A of Figures 2 and 3.

The base 14 comprises a support element 15 that is movable relative to the base. The support element 15 rests on biasing elements 16, for example coil spring supports or biasing cylinders. The number of biasing elements can be chosen according to the application. In the shown examples four biasing elements 16 are provided. This is shown by the dashed circles in Figure 2.

Two protruding elements, or "studs", 13 are fixed underneath the mould 12. The support element 15 has corresponding recesses, or bores, 18 for receiving the protruding elements 13 of the mould 12. In the examples of Figures 1 to 5 the protruding elements 13 rest on the bottoms 17 of the respective two recesses of the support element but it shall be appreciated that the support can also be arranged otherwise. Further, although the two protruding elements 13 have been shown to have circular cross-sections, other shapes and numbers of co-operative elements are possible. It shall thus be appreciated that a different number of differently shaped co-operative elements can be provided to support and align the mould relative to the base.

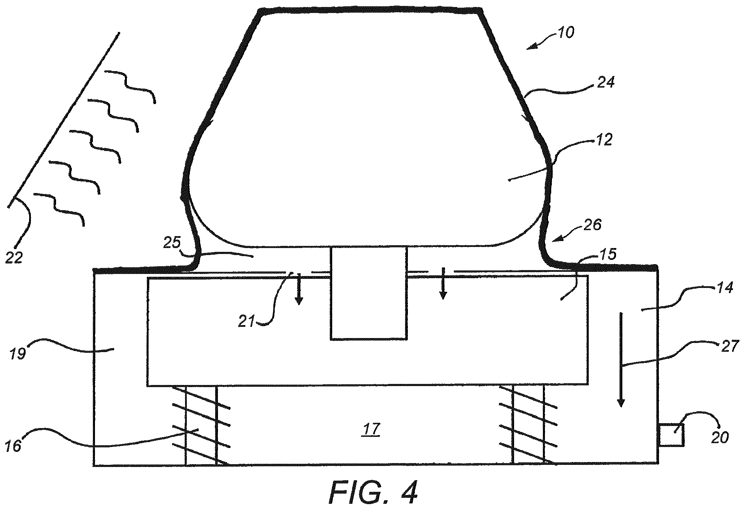

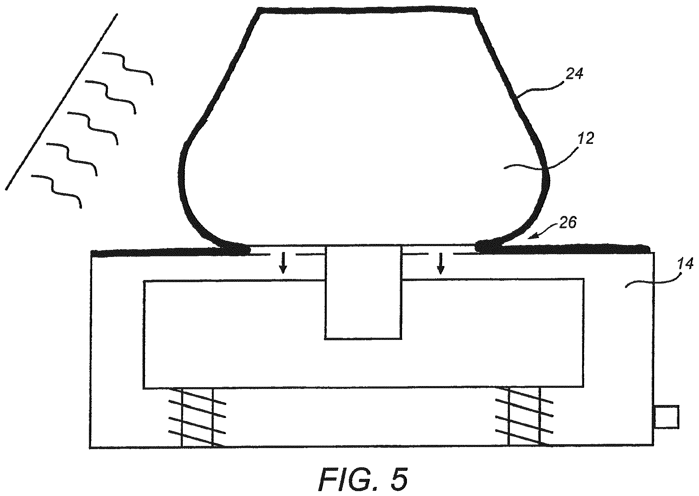

The forming tool 10 further comprises a vacuum generation arrangement. In the example the base 14 comprises a chamber 19 providing a sealed volume within the base block. Generation of vacuum within the chamber or volume 19 in the base 14 can be provided in various manners. Vacuum can be generated within the volume 19 e.g. through connection 20 in any appropriate manner. Openings 21 between the upper surface of the base 14 and the inside volume of the base allow for suction to be generated (denoted by arrows at 21 of Figs. 4 and 5) such that vacuum is applied to upper material 24 placed on top of the mould 12 and the base 14.

As generation of the vacuum within the chamber is not important for understanding the invention this will not be described any further detail. It is sufficient to note that vacuum can be generated between the upper material placed on the mould and the base such that the upper material is drawn against the mould and the base.

If thermoforming materials are used, heating equipment 22 can be provided for application of heat to the upper material 24 during the forming process. After the forming the heat is removed, and the material is allowed to harden to the desired shape.

As indicated by arrow 27 the support element 15 can move downwards within the base block 14. At the same time the support element 15 is biased by the biasing elements 16 against the downwards movement. When the protruding elements 13 of the mould 12 are placed into the recesses 18 of the supporting element 15, and the mould is thus supported in the recesses 18, the forming tool 10 is in a first operational position, shown in Figure 4. When the movement downwards has not yet started the support element 15 is in its uppermost position where a gap 25 is provided between the mould 12 and the upper surface of the base 14.

Figure 4 illustrates the beginning of the upper forming operation. Upper material 24 has been placed on top of the mould and the base. The material can comprise any material that can be vacuum formed, for example, sheet of thermoplastic polyurethane (TPU), Ethylene Vinyl Acetate (EVA), textile-polymer composite microfibers or materials collectively known as artificial leather or "vegan leather" can be used. Such materials include e.g. materials where polymers are cross-linked.

When vacuum is applied from the base 14 through the openings 21 to the underneath of the upper material 24 the material is drawn towards the mould 12 and the upper surface of the base. The upper material is also drawn towards the gap 25. At the same time the vacuum causes the mould 12 to move downwards when the biasing force by the biasing elements 16 is arranged to be less than the drawing force by the vacuum. The cooperation of the gap 25, the vacuum through openings 21 and downward movement of the mould 15 can be used to provide a sharp edge or even an inward bend of the upper material 24 at the low end of the upper that would not be possible with static moulds.

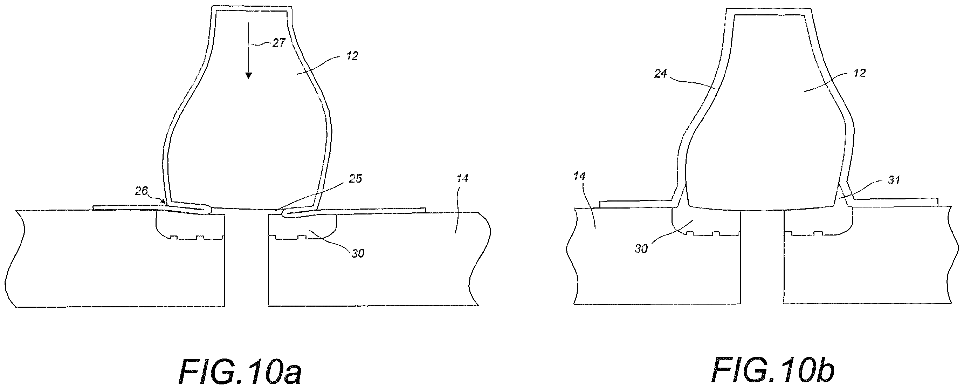

In some applications the vacuum can be applied such that the upper material enters the gap 25 between the mould and the upper surface of the base during the downward movement, at least to some extent. Thus the downward movement of the mould 12 can be used to produce inward extending flange 26 of the upper material such that the material extends underneath the mould. This is shown in Figure of 5 where the vacuum is arranged to be powerful enough such that the upper material becomes drawn underneath the mould and trapped between the mould and the upper surface of the base when the mould is in a second, lower operational position. The inward formed flange or "inlasting" 26 can then be used for bonding between the upper and the sole. An example of this will be explained in more detail with reference to examples shown in Figures 10A and B.

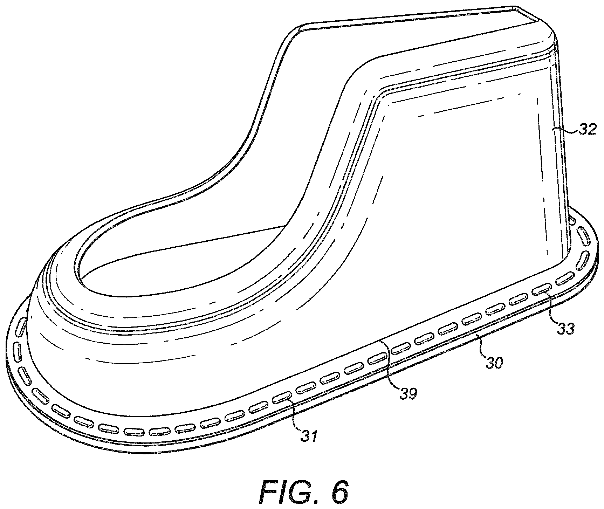

In accordance with a possibility the upper material is drawn towards the gap while the mould moves towards the upper surface of the base such that rather than producing an inlasting a sharp corner can be provided between the side and outlasted welt portion of the upper. The formed outlasting and welt is then used for bonding the upper with the sole. Figure 6 shows an example of such a welt 31 and sharp corner 39 between the welt portion and a side 32 of an upper. Figure 6 also shows an example how the welt can be used for bonding of the upper with a sole part 30.

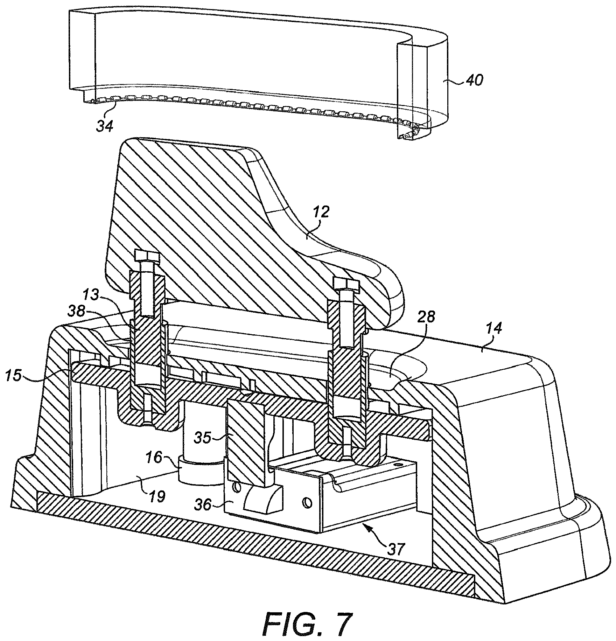

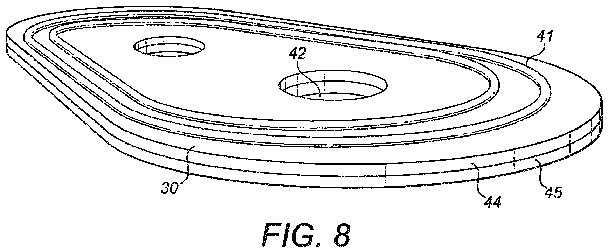

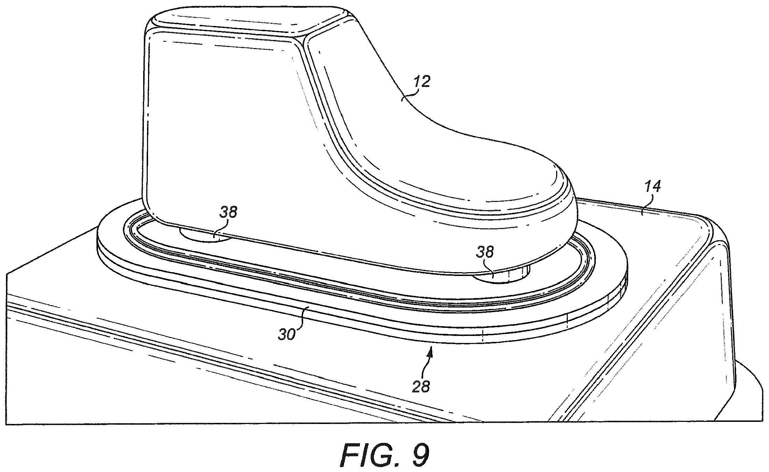

Figure 7 shows a sectioned perspective view of a forming apparatus according to another example. The main operational principle of the apparatus of Figure 7 corresponds to that of Figures 1 to 5. However, the forming tool of Figure 7 is further configured to be better suited for bonding the sole to the upper during the vacuum forming operation, or immediately thereafter. More particularly, a prefabricated sole part 30 shown in Figure 8 can be bonded to the upper by the operation of the apparatus of Figure 7. The prefabricated sole part 30 can be received by a recess 28 on the top surface of the base 14, Figure 9 showing the sole part 30 of Figure 8 being placed on top of the recess 28.

The prefabricated sole part 30 of Figure 8 can comprise pre-applied adhesive 41, for example dried hot-melt glue. The prefabricated sole part can also comprise an insole made of the same material as the upper. For example, insole 44 of a sole component can comprise e.g. an EVA (Ethylene Vinyl Acetate) based material and a PVB (Polyvinyl Butyral) based outsole 45.

Figure 8 shows further apertures 42 provided for enabling the components 13 and 38 of the supporting structure of the tool to extend through the sole part 30. The supporting structures extend through the openings in the sole component, aiding in accurate positioning of the sole component.

As shown by Figure 7, the supporting arrangement can be such that bushes or sleeves 38 protrude from the supporting element 15 through the skirt of the base so that the protruding elements 13 or "studs" of the mould 12 can be placed into the bushes 38. The bushes assist in correct positioning of the sole component on the base 14. The mould and the sole are now aligned by the studs and the bushes, and thus the mould can be accurately pressed on the sole component.

Use of "studs" that can be inserted into and come out of the bushes will allow removal of the mould and hardened shoe forming from the tool once the vacuum forming process has taken place. The studs can also provide a fixture/datum point for the next stage of the assembly process where the mould is connected onto a robotic arm to allow trimming to take place. Once trimming has been completed the mould can be retrieved from the forming.

The two component support structure also provides possibility of a dual rate biasing system. By placing second set of springs between the studs and the bushes it is possible to easily alter the rate of descend of the mould and/or create a dual descend - this may encourage a better undercut/return on the forming. For example, second springs can be placed between the studs and the supporting element providing a sprung platform that require more force to descend than the supporting element. During the forming process the sprung platform will descend first and then lockout once it reaches predefined position, where after a second descend can take place as a result of the stronger spring rate of the second springs.

The mould support shall provide as even a distribution of load as possible. On the other hand, a large support area between the mould and the supporting element is not appropriate as thus would leave a large hole in the sole. The studs can be arranged to spread the load as even as possible during descend whilst minimising the size of cut-outs required in the prefabricated sole component. Apertures such as round or oval holes required in the prefabricated sole component can be closed, e.g. plugged, at the final stages of the manufacturing process, after the components extending there through have been removed.

Figure 7 shows further a forming collar 40 that can be pressed against the welt 31 as described above with reference to Figure 6. The forming collar can have a desired pattern on the lower edge thereof such that this pattern is provided onto the welt material during bonding stage when pressed against the welt. Figure 6 shows an example of pattern 33 that can be produced on the welt 31 by the moulding pattern 34 of the collar 40.

Figure 7 shows also a locking or holding arrangement 37 comprising a lockout latch 36 and a catch 35. The catch can be sprung activated. The latch is fixed to the supporting element 15 such that the latch moves with the supporting element and thus the mould 12. The holding arrangement can be used to hold the mould 12 in the second position or lower until the upper material has cooled down sufficiently and/or the bonding of the upper to the sole component is completed. After a period of time the latch can be released e.g. by the control system of the forming tool.

Figure 10A shows an example of bonding of upper with a sole part 30 according to the herein described principles. The upper material has been drawn into the gap 25 to provide inlasting 26. The material extending into the gap between the mould 12 and the sole component 39 can be pressed as indicated by arrow 27 against the sole part 30 placed in the sole supporting area of the base 14. The materials can be glued and/or fused together by the pressure and/or heat. It is possible to directly cement the upper to the sole. It is also possible to use the "outflange" part provided by the upper material extending out of the gap for bonding the upper material to a welt of the sole. This may also be provided based on use of sole stitching, fusing (heat and/or pressure), adhesive and so on.

Figure 10B shows another example where the sole part 30 on the base 14 is provided with upward extending corner part 31. The bonding can be provided between the upper material 24 and the corner part. This may also be provided based on corner stitching, fusing, adhesive, and so on.

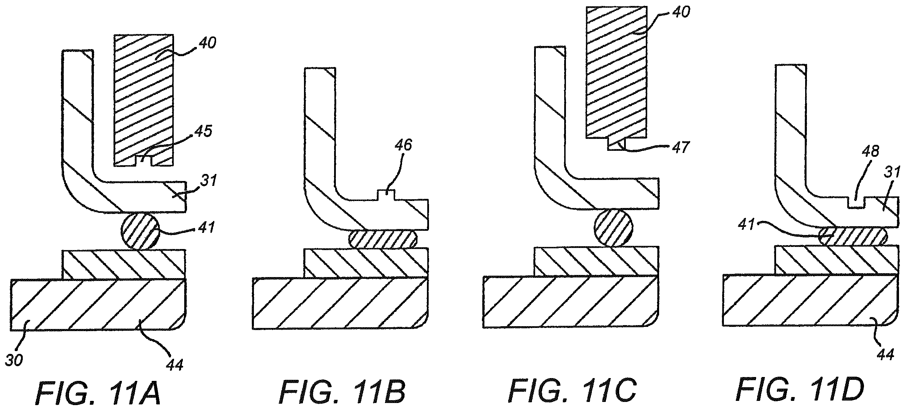

Figures 11A to 11D show sectioned views of further examples of joining the upper and the sole. In these examples adhesive 41 is provided on the upper surface of a welt portion 44 on the edge of a sole part 30. Corresponding welt portion 31 of the upper is pressed against the adhesive and the sole by collar 40.

In the example of Figures 11A and B the collar 40 has a recess 45 that forms that forms a pattern of protruding formation 46 on the welt. The pattern formed on the welt 31 can have the appearance of stitching. In the example of Figures 11C and D the collar 40 has a protruding element 47 that forms 31 a recess 48 on the welt 31. Formations 46 and 48 can both be provided on the welt, and can e.g. alternate. The protruding element 46 can cause local pressure on the materials of the welt portions 31 and 44 and on the adhesive 41, thereby assisting in efficient local fusing of the material.

Use of mechanical pressure for the bonding can be advantageous e.g. if materials are used that could lose the formed shape if heated excessively at the bonding stage.

The components can be welded or fused together without use of any adhesives. This can be advantageous e.g. when there is a desire to avoid industrial emissions that are possible with certain types of adhesives. Bonding of upper and sole materials can be provided based on techniques using heat and/or pressure. The pressure can be provided by vacuum sucking the component materials together. The fusing operation can be computer controlled. Appropriate temperature and/or pressure etc. parameters for different materials can be found by testing. For example, materials of appropriately dimensioned and shaped surface areas are fused together under appropriate temperatures and programmed vacuum pressures, over an appropriate period of time before the materials are cooled. Testing has shown that the bond strength achieved by fusing far exceeds footwear requirements, even if no adhesives are used.

The non-adhesive welding concept can also be used e.g. to bond linings to the outsides.

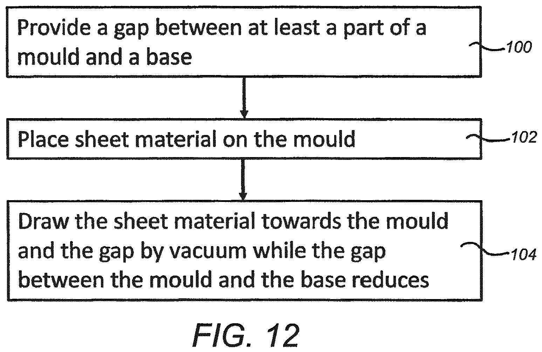

Figure 12 shows a flowchart for a process of manufacturing an article of footwear. In the beginning of a manufacturing cycle at step 100 a mould is supported relative to a base of a forming tool such that a gap is provided between at least a part of the mould and the base. Upper material is placed on the mould at 102 and drawn towards the mould and the gap at 104 by vacuum at the same time when the gap between the mould and the base reduces.

The mould can be biased away from the base. The movement between the base and the mould can be caused by the vacuum drawing the upper material towards the base and overcoming the biasing force.

A different bias can be applied in different parts of the mould to provide desired movement of the mould relative to the base. This can be done to accommodate the different desired shape of the upper and the mould at different locations and different suction forces caused by different surface areas at different locations to ensure appropriate movement of the mould. The bias applied to at least a part of the mould can be made adjustable. For example, differently sized and/or shaped moulds and/or uppers can require differently arranged biasing. The adjustment can be controlled by a control system, for example when adjustable biasing elements are used. Alternatively, the apparatus can be configured to enable easy manual change of spring components or the like.

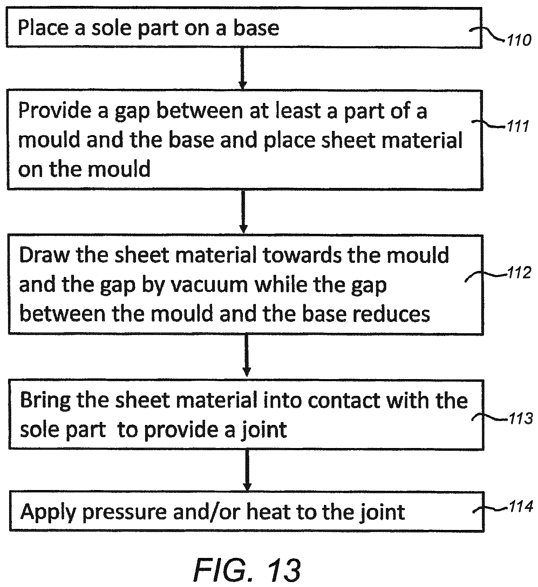

In accordance with an embodiment shown in Figure 13 a sole part of a footwear can be placed on the base at 110 at the beginning of the manufacturing cycle. The placing can be provided e.g. by means of an automaton such as a robot. At 111 a gap is provided between the mould and the base where after upper material is placed on the mould, as above. When the upper material is drawn towards the gap at 112 the material can be brought into contact with the sole part at 113 by the vacuum and the relative movement between the mould and the base.

The sole part can comprise a prefabricated sole comprising an adhesive component, the adhesive component being activated when pressed against the upper material and/or heated at 114.

At this stage material on the sole part may fuse with the upper material. Additional pressing tools may also be used at this stage. If no adhesives are used, components can be welded or fused together using heart and/or pressure. The method can comprise providing a vacuum for sucking component materials together. Bonding can comprise fusing together materials of appropriately dimensioned and shaped surface areas under appropriate temperatures and programmed vacuum pressures, over an appropriate period of time before the materials are cooled. Other components can be bond in similar fashion, for example linings can be bonded by fusing to the outsides.

At the end of the forming cycle the article of footwear can comprise an upper and therein bonded sole. The mould can be removed from the upper such that one of more supports extending through one or more apertures on the sole removed by pulling the mould from the upper though an ankle opening in the upper. This stage can be provided by an automated tool such as a robot.

After the forming excess upper material can be cut off. This can take place when the mould is still within the formed upper, or after the mould has been removed. Also, holes and/or decorative features can be cut to the upper material. The cutting can be provided by a laser cutting tool. For certain materials a relatively low powered laser, for example a laser with about 20 kW nominal power, can be used.

According to a possibility the formed upper material is moved relative to the laser cutting tool by a robot. Moving the object rather than the laser tool is a safety measure ensuring that the laser beam is pointed to the same direction rather than swings freely in the three dimensional work space. However, it is possible to move the laser beams and/or both the laser beam and the upper.

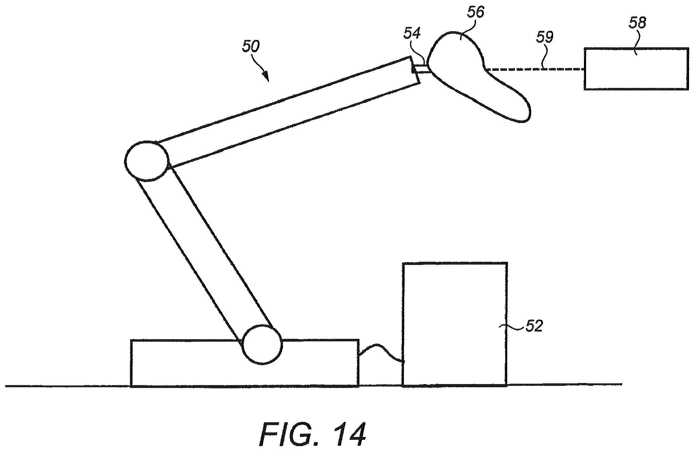

An example of use of a robot 50 for the trimming stage of a formed upper 56 is shown in Figure 14. The robot 50 can comprise a gripping tool 54 arranged to appropriately grip the formed upper. The robot can be arranged to remove the mould from the formed upper. A tool can be provided that grips the mould and removes it from the upper. The robot can grip e.g. the protruding support elements, or the empty upper if the mould has already been removed, and move the upper relative to the laser beam 59 by the cutting tool 58 in appropriate manner. The robot can advantageously comprise a 7-axis robot.

The upper material of the formed upper can be cut and trimmed to provide an upper with desired shapes, cuts and patterns. For example, the final shape, eyelets and/or other openings such as vents or decorative holes, tongue, facing parts of the vamp, and decorative patterns can be provided by laser cutting.

The robot 50 can be controlled by a controller 52. The controller 52 can be configured to control the operation of the various elements of the forming apparatus as described herein. Alternatively, the controller 52 can be connected to one of more other controllers to ensure cooperation between the various tools.

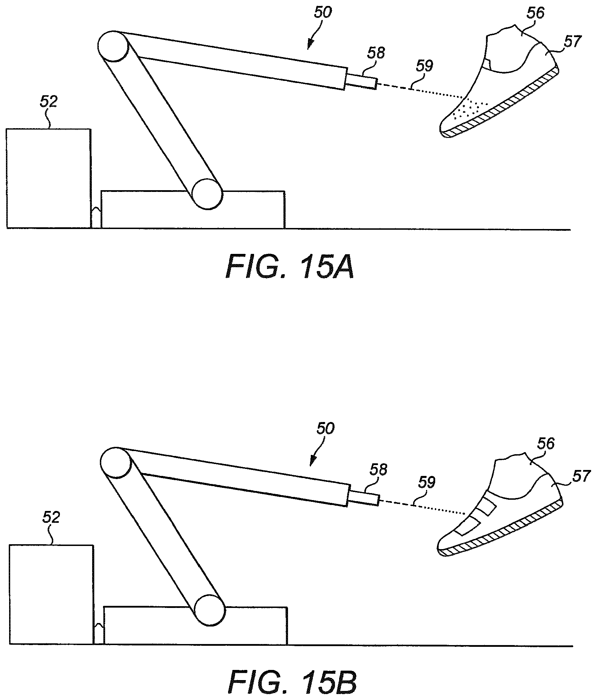

According to a possibility different styles and types of footwear can be cut from a single type of formed upper. For example, operator of the apparatus can select the final style from a plurality of possibilities. Schematic examples of this are illustrated by Figures 15A and B where different final products 57 (the outline of these shown by the stronger lines) are cut by laser beam 59 from a vacuum formed article 56 by the robot 50.

Figures 15A and B also illustrate the possibility of attaching the cutting tool 58 to the robot.

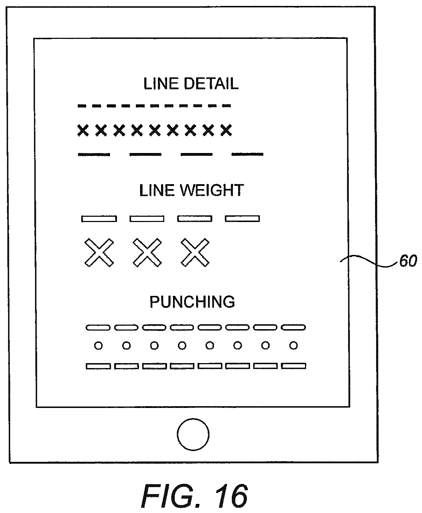

The operator can select desired cuts from a user interface of the control system. Figure 16 illustrates an example of a graphical user interface 60 enabling the operator to customize various detail by selecting the desired patterns from the screen. Because of the flexibility and possibility of use one or only few different formed "bland" for a variety of final products a flexible manufacturing system can be provided.

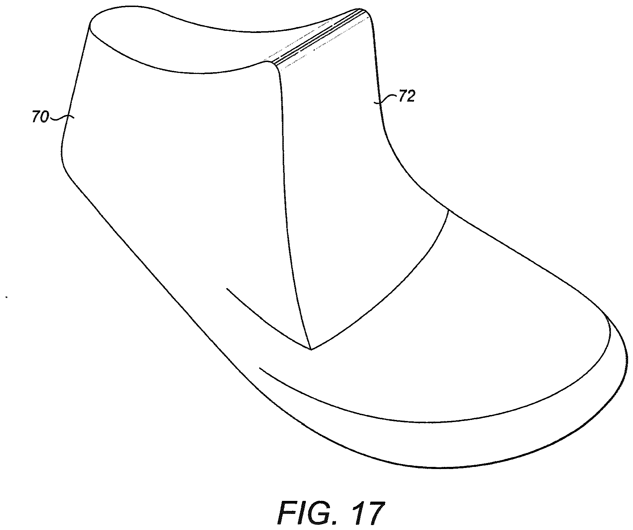

Figure 17 shows an example of a mould 70 that has been shaped to enable production of an upper with a tongue and facing parts of the vamp such that the facing parts overlap the tongue at the final article. This can be provided by a mould that has an over dimensioned frontal part 72 so that when the formed upper material is cut there is enough upper material to provide facing parts of the vamp overlapping the tongue.

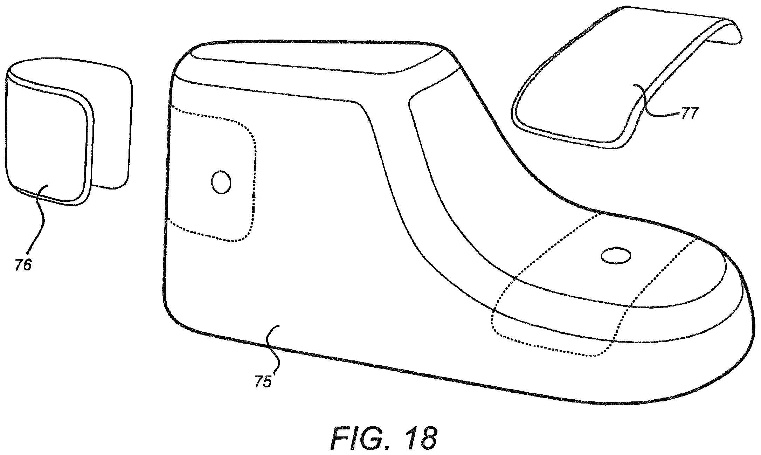

According to an aspect a dynamic mould or last is provided. Figure 18 shows an example of an adjustable mould 75 with exchangeable parts 76 and 77 by mean of which the shape of the mould can be altered. In this aspect the mould can be adjusted according to a foot. In accordance with a possibility differently sized and/or shaped lasts are provided by modular moulds. Differently sized and/or shaped parts altering the size and/or shape of the mould can be attached to a base mould part by e.g. magnets or other fast attachment means. According to a possibility deformable and/or extendable mould is provided based on hydraulic arrangements. For example, the external shape of the mould be can be provided from rubber that is hard enough to resist the pressure from the vacuum forming while at the same time allowing extension of the external dimensions thereof by application of fluid, e.g. water or other suitable fluid for generating hydraulic pressure, underneath the rubber skin.

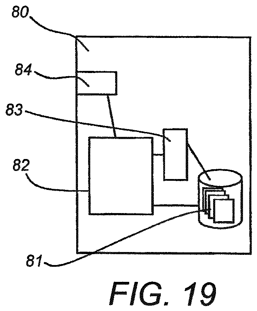

The manufacturing process can be controlled by one or more controller units. Figure 19 shows an example of control apparatus for the control. The control apparatus 80 can be for example integrated with, coupled to and/or otherwise controlling the forming tool, the robot and cutting devices. For this purpose the control apparatus comprises at least one memory 81, at least one data processing unit 82, 83 and an input/output interface 84. Via the interface the control apparatus can be coupled to the devices it is indented to control and/or a communication system for communication with other data processing apparatus, for example a manufacturing control system. The control apparatus can be configured to execute an appropriate software code to provide the control functions.

Measurement data and other user specific data may have been be collected at a remote database such as in a server. The data may be associated with a user profile, and used e.g. for purchasing transactions. Data needed for the manufacture and control thereof can be communicated to the control apparatus of the forming apparatus from the remote location. The possibility of communicating manufacturing control instructions, measurement data and other data can be found useful for example in applications where footwear is manufactured in a plurality of remote locations, for example in local distribution centres and/or shoe shops. For example, data can be communicated over an Internet Protocol (IP) based network between a remote server and local controllers.

According to an aspect data based on images by digital imaging apparatus is used in manufacture of footwear. For example, digital cameras or smartphones can be used collecting the data. The data can comprise measurement data. Also, decorations of the footwear can be based on images from imaging apparatus. For example, a desired pattern may be produced on footwear based on image data. The pattern can be prefabricated, e.g. printed or mould, on the upper material and/or produced at the trimming stage.

Further, layered uppers can be produced. For example, uppers consisting at least partially of two of more different material layers can be used. The layers can be of different thickness, density, material, colour and so on.

While various aspects of the invention may be illustrated and described as block diagrams, flow charts, or using some other schematic pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The base, the moveable mould and other components of the tool can be manufactured from a variety of materials by a variety of techniques. The base and/or the mould can be made for example from plastic, aluminium or another metal allow, wood, hard rubber and so forth.

The foregoing description provides by way of exemplary and non-limiting examples a full and informative description of exemplary embodiments of the invention. However, various modifications and adaptations may become apparent to those skilled in the relevant arts in view of the foregoing description, when read in conjunction with the accompanying drawings and the appended claims. All such and similar modifications of the teachings of this invention will still fall within the scope of this invention as defined by the claims.

## Claims

1. A method of manufacturing an article of footwear, comprising
moveably supporting a mould (12) relative to a base (14) of a forming tool such that a gap (25) is provided between at least a part of the mould and the base,
placing upper material (24) on the mould,
drawing the upper material (24) towards the mould (12) and the gap (25) by vacuum (21) at the same time when the gap between the mould and the base (14) reduces, **characterized by**
supporting a sole part (30) of the article of footwear on the base (14), bringing the upper material (24) drawn towards the gap (25) into contact with the sole part by the relative movement between the mould (12) and the base, and
bonding the upper material and the sole part.

2. A method as claimed in claim 1, comprising at least one of:
biasing the mould (12) away from the base (14);
biasing the mould (12) away from the base (14) such that different bias is applied in different parts of the mould;
biasing the mould (12) away from the base (14) while adjusting the bias applied to at least a part of the mould;
drawing the mould (12) towards the base (14) by vacuum; and
holding the mould (12) in a position where the upper material (24) forming an upper is in contact with the sole part (30), and releasing the mould.

3. A method as claimed in claim 1 or 2, wherein
the sole part (30) comprises a prefabricated sole part comprising an adhesive component (41), the method comprising activating the adhesive component when pressed against the upper material and/or heated.

4. A method as claimed in any preceding claim, comprising joining material on the sole part (30) of the article of the footwear with the upper material (24) using an adhesive.

5. A method as claimed in any of claims 1 to 3, comprising fusing material of the sole part (30) of the article of the footwear with the upper material (24) without using an adhesive.

6. A method as claimed in any preceding claim, further comprising cutting the upper material by a laser cutting tool (58), the cutting comprising moving by a robot (50) the formed upper material (56) relative to the laser cutting tool.

7. A method as claimed in any preceding claim, wherein the article of footwear comprises an upper formed of the upper material and bonded to the sole part and the mould is removably supported on the base by at least one support (38) extending through respective aperture (42) in the sole part (30), the method comprising removing the mould (12) from the upper though an ankle opening.

8. Apparatus (10) for producing an article of footwear, comprising:
a base (14),
a mould (12) movably supported relative to the base such that in a first position a gap (25) is provided between at least a part of the mould and the base and in a second position the gap is reduced,
a vacuum arrangement (20, 21) configured to apply vacuum to upper material (24) placed on the mould to draw the upper material towards the mould (12) and the gap (25) at the same time when the gap is reduced, wherein the base (14) is configured to support a sole part (30) of the article of footwear, the apparatus being configured to bring the upper material (24) drawn towards the gap (25) in contact with the sole part and to cause bonding of the upper material and the sole part by pressing the sole part against the upper material drawn underneath the mould.

9. An apparatus as claimed in claim 8, comprising a biasing arrangement (16) configured to bias the mould (12) away from the base (14).

10. An apparatus as claimed in claim 9, wherein
the biasing arrangement configured to apply a different bias between the mould and the base in different parts of the mould; and/or
the biasing arrangement comprises at least one spring and/or shock absorber; and/or
the biasing arrangement is configured to provide multistage biasing; and/or
the biasing arrangement is adjustable.

11. An apparatus as claimed in any of claim 8 to 10, wherein the sole part comprises a prefabricated sole part comprising an adhesive component (41), the apparatus being configured to press the adhesive component of the prefabricated sole part against the upper material drawn underneath the mould or against a welt part of the prefabricated sole part.

12. An apparatus as claimed in any of claims 8 to 11, comprising a support arrangement configured to extend between the mould (12) and a moveable support element (15) of the base (12) through one or more openings (42) of a sole part (30) placed between the mould and the base, wherein the support arrangement comprises at least two protruding elements (13) and corresponding bushes (38) receiving the protruding elements.

13. An apparatus as claimed in claim 12, comprising at least one element providing spring action between a protruding element (13) and corresponding bush (38).

14. An apparatus as claimed in any of claims 8 to 13, comprising a laser tool (58) for trimming the upper material and/or a robot (50) configured to move the upper material in at least one stage of manufacture of the article of footwear and/or take a grip on the support arrangement.

15. An apparatus as claimed in any of claims 8 to 14, wherein the shape and/or size of the mould (75) is adjustable.

## Patentansprüche

1. Verfahren zur Herstellung eines Schuhartikels, umfassend:
bewegliches Stützen einer Form (12) in Bezug auf eine Basis (14) eines Formwerkzeugs, so dass eine Lücke (25) zwischen mindestens einem Teil der Form und der Basis bereitgestellt wird,
Platzieren von Obermaterial (24) auf der Form,
Ziehen des Obermaterials (24) mittels Vakuum (21) gleichzeitig zu der Form (12) und der Lücke (25) hin, wenn die Lücke zwischen der Form und der Basis (14) sich verringert, **gekennzeichnet durch**
Stützen eines Sohlenteils (30) des Schuhartikels auf der Basis (14),
Inkontaktbringen des Obermaterials (24), das zu der Lücke (25) hin gezogen wurde, mit dem Sohlenteil durch die relative Bewegung zwischen der Form (12) und der Basis und
Verkleben des Obermaterials und des Sohlenteils.

2. Verfahren nach Anspruch 1, umfassend mindestens eines von:
Vorspannen der Form (12) von der Basis (14) weg;
Vorspannen der Form (12) von der Basis (14) weg, so dass eine unterschiedliche Vorspannung auf unterschiedliche Teile der Form angewendet wird;
Vorspannen der Form (12) von der Basis (14) weg, während die auf mindestens einen Teil der Form angewendete Vorspannung justiert wird;
Ziehen der Form (12) mittels Vakuum zu der Basis (14) hin und
Halten der Form (12) in einer Position, in der das Obermaterial (24), das ein Oberleder bildet, in Kontakt mit dem Sohlenteil (30) ist, und Freigeben der Form.

3. Verfahren nach Anspruch 1 oder 2, wobei
der Sohlenteil (30) einen vorgefertigten Sohlenteil umfasst, der eine Klebstoffkomponente (41) umfasst, wobei das Verfahren ein Aktivieren der Klebstoffkomponente umfasst, wenn sie gegen das Obermaterial gedrückt und/oder erhitzt wird.

4. Verfahren nach einem vorhergehenden Anspruch, umfassend ein Verbinden von Material auf dem Sohlenteil (30) des Artikels des Schuhs mit dem Obermaterial (24) unter Verwendung eines Klebstoffs.

5. Verfahren nach einem der Ansprüche 1 bis 3, umfassend ein Verschmelzen von Material des Sohlenteils (30) des Artikels des Schuhs mit dem Obermaterial (24) ohne Verwendung eines Klebstoffs.

6. Verfahren nach einem vorhergehenden Anspruch, umfassend ein Schneiden des Obermaterials mit einem Laserschneidwerkzeug (58), wobei das Schneiden ein Bewegen des geformten Obermaterials (56) in Bezug auf das Laserschneidwerkzeug durch einen Roboter (50).

7. Verfahren nach einem vorhergehenden Anspruch, wobei der Schuhartikel ein Oberleder umfasst, das aus dem Obermaterial geformt und mit dem Sohlenteil verklebt ist, und die Form durch mindestens eine Stütze (38), die sich durch ein jeweiliges Loch (42) in dem Sohlenteil (30) erstreckt, entfernbar auf der Basis gestützt ist, wobei das Verfahren ein Entfernen der Form (12) von dem Obermaterial durch eine Knöchelöffnung umfasst.

8. Vorrichtung (10) zur Produktion eines Schuhartikels, umfassend:
eine Basis (14),
eine Form (12), die in Bezug auf die Basis beweglich gestützt ist, so dass in einer ersten Position eine Lücke (25) zwischen mindestens einem Teil der Form und der Basis bereitgestellt wird und in einer zweiten Position die Lücke verringert wird,
eine Vakuumanordnung (20, 21), die dazu konfiguriert ist, ein Vakuum an Obermaterial (24) anzulegen, das auf der Form platziert ist, um das Obermaterial gleichzeitig zu der Form (12) und der Lücke (25) hin zu ziehen, wenn die Lücke sich verringert wird, wobei
die Basis (14) dazu konfiguriert ist, einen Sohlenteil (30) des Schuhartikels zu stützen, wobei die Vorrichtung dazu konfiguriert ist, das Obermaterial (24), das zu der Lücke (25) hin gezogen wurde, mit dem Sohlenteil in Kontakt zu bringen und ein Verkleben des Obermaterials und das Sohlenteils durch Drücken des Sohlenteils gegen das Obermaterial, das unter die Form gezogen wird, zu bewirken.

9. Vorrichtung nach Anspruch 8, umfassend eine Vorspannungsanordnung (16), die dazu konfiguriert ist, die Form (12) von der Basis (14) weg vorzuspannen.

10. Vorrichtung nach Anspruch 9, wobei
die Vorspannungsanordnung dazu konfiguriert ist, eine unterschiedliche Vorspannung zwischen der Form und der Basis in unterschiedlichen Teilen der Form anzuwenden; und/oder
die Vorspannungsanordnung mindestens eine Feder und/oder einen Schockdämpfer umfasst und/oder
die Vorspannungsanordnung dazu konfiguriert ist, eine mehrstufige Vorspannung bereitzustellen; und/oder
die Vorspannungsanordnung justierbar ist.

11. Vorrichtung nach einem der Ansprüche 8 bis 10, wobei der Sohlenteil einen vorgefertigten Sohlenteil umfasst, der eine Klebstoffkomponente (41) umfasst, wobei die Vorrichtung dazu konfiguriert ist, die Klebstoffkomponente des vorgefertigten Sohlenteils gegen das Obermaterial, das unter die Form gezogen wird, oder gegen einen Bördelteil des vorgefertigten Sohlenteils zu drücken.

12. Vorrichtung nach einem der Ansprüche 8 bis 11, umfassend eine Stützanordnung, die dazu konfiguriert ist, sich zwischen der Form (12) und einem beweglichen Stützelement (15) der Basis (12) durch eine oder mehrere Öffnungen (42) eines Sohlenteils (30), der zwischen der Form und der Basis platziert ist, zu erstrecken, wobei die Stützanordnung mindestens zwei vorstehende Elemente (13) und entsprechende Buchsen (38), die die vorstehenden Elemente aufnehmen, umfasst.

13. Vorrichtung nach Anspruch 12, umfassend mindestens ein Element, das eine Federwirkung zwischen einem vorstehenden Element (13) und einer entsprechenden Buchse (38) bereitstellt.

14. Vorrichtung nach einem der Ansprüche 8 bis 13, umfassend ein Laserwerkzeug (58) zum Zuschneiden des Obermaterials und/oder einen Roboter (50), der dazu konfiguriert ist, das Obermaterial in mindestens einem Schritt der Herstellung des Schuhartikels zu bewegen und/oder die Stützanordnung zu greifen.

15. Vorrichtung nach einem der Ansprüche 8 bis 14, wobei die Form und/oder die Größe der Form (75) justierbar sind.

## Revendications

1. Procédé de fabrication d'un article chaussant, comportant les étapes consistant à
supporter de manière mobile un moule (12) par rapport à une base (14) d'un outil de formage de telle sorte qu'un espace (25) est mis en œuvre entre au moins une partie du moule et la base,
placer un matériau de tige (24) sur le moule,
tirer le matériau de tige (24) en direction du moule (12) et de l'espace (25) par aspiration (21) en même temps quand l'espace entre le moule et la base (14) se réduit, **caractérisé par** les étapes consistant à
supporter une partie semelle (30) de l'article chaussant sur la base (14),
rapprocher le matériau de tige (24) tiré en direction de l'espace (25) en contact avec la partie semelle par le mouvement relatif entre le moule (12) et la base, et
lier le matériau de tige et la partie semelle.

2. Procédé selon la revendication 1, comportant au moins l'une parmi les étapes consistant à :
solliciter le moule (12) à l'opposé de la base (14) ;
solliciter le moule (12) à l'opposé de la base (14) de telle sorte qu'une sollicitation différente est appliquée dans différentes parties du moule ;
solliciter le moule (12) à l'opposé de la base (14) tout en ajustant la sollicitation appliquée sur au moins une partie du moule ;
tirer le moule (12) en direction de la base (14) par aspiration ; et
maintenir le moule (12) dans une position dans laquelle le matériau de tige (24) formant une tige est en contact avec la partie semelle (30), et libérer le moule.

3. Procédé selon la revendication 1 ou la revendication 2, dans lequel
la partie semelle (30) comporte une partie semelle préfabriquée comportant un composant adhésif (41), le procédé comportant l'étape consistant à activer le composant adhésif quand il est comprimé contre le matériau de tige et/ou chauffé.

4. Procédé selon l'une quelconque des revendications précédentes, comportant l'étape consistant à relier le matériau sur la partie semelle (30) de l'article chaussant avec le matériau de tige (24) au moyen d'un adhésif.

5. Procédé selon l'une quelconque des revendications 1 à 3, comportant l'étape consistant à fusionner le matériau de la partie semelle (30) de l'article chaussant avec le matériau de tige (24) sans utiliser un adhésif.

6. Procédé selon l'une quelconque des revendications précédentes, comportant par ailleurs l'étape consistant à découper le matériau de tige au moyen d'un outil de découpage au laser (58), l'étape consistant à découper comportant l'étape consistant à déplacer, par un robot (50), le matériau de tige formé (56) par rapport à l'outil de découpage au laser.

7. Procédé selon l'une quelconque des revendications précédentes, dans lequel l'article chaussant comporte une tige formée à partir du matériau de tige et liée à la partie semelle et le moule est supporté de manière amovible sur la base par au moins un support (38) s'étendant au travers d'une ouverture respective (42) dans la partie semelle (30), le procédé comportant l'étape consistant à retirer le moule (12) de la tige au travers d'une ouverture au niveau de la cheville.

8. Appareil (10) servant à produire un article chaussant, comportant :
une base (14),
un moule (12) supporté de manière mobile par rapport à la base de telle sorte que, dans une première position, un espace (25) est mis en œuvre entre au moins une partie du moule et la base et, dans une deuxième position, l'espace est réduit,
un agencement d'aspiration (20, 21) configuré pour appliquer un vide sur le matériau de tige (24) placé sur le moule pour tirer le matériau de tige en direction du moule (12) et de l'espace (25) en même temps quand l'espace est réduit, dans lequel la base (14) est configurée pour supporter une partie semelle (30) de l'article chaussant, l'appareil étant configuré pour rapprocher le matériau de tige (24) tiré en direction de l'espace (25) en contact avec la partie semelle et pour amener la liaison du matériau de tige et de la partie semelle par compression de la partie semelle contre le matériau de tige tiré sous le moule.

9. Appareil selon la revendication 8, comportant un agencement de sollicitation (16) configuré pour solliciter le moule (12) à l'opposé de la base (14).

10. Appareil selon la revendication 9, dans lequel
l'agencement de sollicitation est configuré pour appliquer une sollicitation différente entre le moule et la base dans différentes parties du moule ; et/ou
l'agencement de sollicitation comporte au moins un ressort et/ou un amortisseur de chocs ; et/ou
l'agencement de sollicitation est configuré pour procurer une sollicitation en plusieurs étapes ; et/ou
l'agencement de sollicitation est en mesure d'être ajusté.

11. Appareil selon l'une quelconque des revendications 8 à 10, dans lequel la partie semelle comporte une partie semelle préfabriquée comportant un composant adhésif (41), l'appareil étant configuré pour comprimer le composant adhésif de la partie semelle préfabriquée contre le matériau de tige tiré sous le moule ou contre une partie trépointe de la partie semelle préfabriquée.

12. Appareil selon l'une quelconque des revendications 8 à 11, comportant un agencement de support configuré pour s'étendre entre le moule (12) et un élément de support mobile (15) de la base (12) au travers d'une ou de plusieurs ouvertures (42) d'une partie semelle (30) se trouvant entre le moule et la base, dans lequel l'agencement de support comporte au moins deux éléments faisant saillie (13) et des bagues correspondantes (38) recevant les éléments faisant saillie.

13. Appareil selon la revendication 12, comportant au moins un élément procurant une action de ressort entre un élément faisant saillie (13) et une bague correspondante (38).

14. Appareil selon l'une quelconque des revendications 8 à 13, comportant un outil laser (58) servant à tailler le matériau de tige et/ou un robot (50) configuré pour déplacer le matériau de tige dans au moins une étape de la fabrication de l'article chaussant et/ou s'accrocher au niveau de l'agencement de support.

15. Appareil selon l'une quelconque des revendications 8 à 14, dans lequel la forme et/ou la taille du moule (75) est en mesure d'être ajustée.
